# EUROPEAN PATENT APPLICATION

(11) **EP 1 728 676 A2**
(43) Date of publication of application: **06.12.2006**
(21) Application number: 06252795.7
(22) Date of filing: 30.05.2006
(51) Int. Cl.: B60N 2/28, A47D 13/02

(54) **Juvenile transport product and method**

(30) Priority: 31.05.2005 US 141295
(71) Applicant: Britax Child Safety Inc., Charlotte, NC 28273 (US)
(72) Inventor: Nakhla, Said, Clarkston Michigan 48348 (US); Alexander, Cherie, York South Carolina 29745 (US)
(74) Representative: Ablett, Graham Keith

(57) **Abstract**

A juvenile transport product, such as an infant carrier (10), has a load-bearing support skeleton (40) for rigidly supporting the juvenile transport product in a predetermined configuration, and a foam body (50) molded to the skeleton and supported thereby. The foam body has a shape generally corresponding to the shape of the juvenile transport product. A protective cover, or microshell, is adhered to the foam body to protect the foam against damage from wear and impacts.

## Description

### Technical Field and Background of the Invention

This invention relates generally to a juvenile transport product system, and more particularly to a juvenile product system that includes an infant carrier of improved construction that is optionally mountable, for example, to a stroller and/or a stay-in-the-car base. The system includes several features that collectively provide a juvenile product system with enhanced comfort and safety features. While the particular exemplary embodiment disclosed in this application is of an infant carrier, the inventive features of the system have application in other juvenile seating and transportation products, such as child safety seats, booster seats, strollers, and carriages.

Infant carriers typically include an impact polymer shell and a shock absorbing component interior. Conventional infant carriers are relatively heavy, contain fragile shock attenuating component parts, and are awkward to carry. Prior art juvenile seats such as infant carriers often include an impact polymer shell and a shock-absorbing component interior. This structure has been used for many years to provide a reasonable compromise among strength, durability, economy and weight considerations.

The present invention discloses a novel method of fabricating an infant carrier by injection-molding the infant carrier body out of foam with a load- bearing skeleton embedded within the foam. The resulting structure is a rigid, lightweight body that meets and exceeds all applicable safety standards for such juvenile seating products.

Since the foam body of the novel infant carrier disclosed herein is not outwardly attractive in appearance and is not by itself durable enough for everyday use, a cover or shell is provided to both protect and decorate the foam body of the infant carrier. However, the disadvantage of using a hard plastic shell of the type typically used on prior art infant carriers is that such a hard plastic shell would add an unacceptable amount of weight to the infant carrier, when one of the objects of the invention is important to provide a carrier that is as light as possible.

Another disadvantage of the hard plastic shell found on prior art carriers is that it is difficult to apply decoration to its surface. Typically, decoration is accomplished by coloring the plastic compound used to form the shell, painting the outside of the shell, or by applying decalcomanias. Multicolored plastic shells are more expensive, do not provide as many design options, and may be easily scratched and soiled, thereby detracting from the attractiveness of the shell. Painted shells can also be easily scratched and soiled through normal use, quickly becoming unattractive with an undesirable worn look. Even when new, paint of the type typically used gives the shell a rather lusterless, unattractive appearance. Similarly, decalcomanias may peel off or be scratched, also resulting an a worn, unattractive appearance.

The present invention relates to an improved infant carrier construction that provides an infant carrier suitable for use as an automotive safety restraint and having reduced weight and improved aesthetics as compared to conventional infant carriers. The invention is therefore directed to a comfortable, lightweight, protective infant carrier preferably made from a process of insert molding. The infant carrier includes a skeleton, or insert portion, made of a substantially rigid material that is embedded into the central portion of the infant carrier to act as the load bearing, structural component. The skeleton also serves several other functions including functioning as a hard point for securing attachments to the infant carrier, such as adjustment mechanisms, carrying handles and the like. In addition, the skeleton can include cavities or protrusions for coupling the retention system of the infant carrier to the stay-in-the-car base or stroller. In another embodiment of the invention, the skeleton forms one component of a built-in belt lock off used to prevent belt slippage when the infant carrier is used without the base.

The framework is embedded within a shock attenuating, lightweight molded material that may be a suitable open or closed-cell foam. The lightweight molded material can replace other shock attenuating components while being contoured to better fit the seat occupant for improved comfort. A shell is provided for covering the exterior of the infant carrier for improved aesthetics and durability.

### Summary of the Invention

Therefore, it is an object of the invention to provide an improved infant carrier that provides enhanced safety features.

It is another object of this invention to provide an infant carrier that is substantially rigid and capable of withstanding substantial loading.

It is yet another object of the invention is to provide an infant carrier that weighs less than conventional infant carriers.

It is a further object of the invention is to provide an infant carrier with improved comfort and aesthetic features.

It is another object of the invention to provide an infant carrier that is economical to produce and convenient to use.

It is another object of the invention to provide an infant carrier that easily attaches to and detaches from another structure such as a seat base or stroller.

It is another object of the invention to provide an infant carrier with an external shell that protects the underlying components of the carrier.

It is another object of the invention to provide an infant carrier that is resists soiling and is easy to clean.

These and other objects of the present invention are achieved in the preferred embodiments disclosed below by providing a juvenile transport product, comprising a load-bearing support skeleton for rigidly supporting the juvenile transport product in a predetermined configuration, and a foam body molded to the skeleton and supported thereby. The foam body preferably has a shape generally corresponding to the shape of the juvenile transport product. A protective cover shell is adhered to the foam body to protect the foam against damage from wear and impacts.

According to one preferred embodiment of the invention, the support skeleton is formed of an openwork structure defined by integrally-formed support members and weight-reducing voids.

According to another preferred embodiment of the invention, the support skeleton is formed from a material selected from the group consisting of carbon fibers, plastics, resins and combinations of carbon fibers, plastics and resins.

According to yet another preferred embodiment of the invention, the support skeleton comprises first and second side components and an intermediate component adapted to be secured between the first and second side components to form a unitary skeleton.

According to yet another preferred embodiment of the invention, the juvenile transport product comprises an infant carrier, and the support skeleton comprises first and second infant carrier side components and an intermediate seat component adapted to be secured between the first and second side components to form a unitary infant carrier skeleton.

According to yet another preferred embodiment of the invention, the juvenile transport product comprises an infant carrier, and the support skeleton comprises an integrally-formed, unitary infant carrier skeleton.

According to yet another preferred embodiment of the invention, the body comprises foam selected from the group consisting of open cell foam and closed cell foam.

According to yet another preferred embodiment of the invention, the foam body comprises a foam selected from the group consisting of expanded polystyrene (EPS), expanded polypropylene (EPP), urethane or combination thereof.

According to yet another preferred embodiment of the invention, the protective cover is selected from the group consisting of polyethylene terephthalate (PET) polyethylene terephthalate modified with glycol (PETG), polyvinyl chloride (PVC), polycarbonate (PC), polycarbonate blended with acrylonitrile-butadiene-styrene copolymer (PC/ABS), high density polyethylene (HDPE), high molecular weight polyethylene (HMWPE), and polypropylene (PP).

According to yet another preferred embodiment of the invention, the protective cover forms a thin, transparent, resilient, reflective surface.

According to yet another preferred embodiment of the invention, the protective cover has a thickness of about between .038cm and .5cm.

According to yet another preferred embodiment of the invention, the protective cover has a thickness of about .05cm to about .1cm.

According to yet another preferred embodiment of the invention, a carry handle assembly is pivotally mounted to the skeleton.

A method of forming a juvenile transport product according to one embodiment of the invention comprises the steps of forming a load-bearing support skeleton for supporting the juvenile transport product in a predetermined configuration, placing the support skeleton in a mold, and molding a foam body to the skeleton.

Preferably, the foam body has a shape generally corresponding to the shape of the juvenile transport product. A protective cover shell is adhered to the foam body to protect the foam against damage from wear and impacts.

According to yet another preferred embodiment of the invention, the step of forming the skeleton comprises the step of molding the skeleton.

According to yet another preferred embodiment of the invention, the step of molding the foam body to the skeleton comprises the step of injection molding.

According to yet another preferred embodiment of the invention, the step of forming the skeleton comprises the step of molding the skeleton in a single piece.

According to yet another preferred embodiment of the invention, the step of forming the skeleton comprises the steps of molding a plurality of skeleton elements that collectively comprise the entire skeleton, and joining the skeleton elements to form the skeleton before molding the foam body to the skeleton.

According to yet another preferred embodiment of the invention, the protective cover comprises a plurality of cover elements applied to different parts of the foam body.

According to yet another preferred embodiment of the invention, the method includes the step of molding the protective cover to the foam body during the foam body molding step.

According to yet another preferred embodiment of the invention, the method includes the step of adhering the protective cover to the foam body after the foam body molding step.

According to yet another preferred embodiment of the invention, the step of adhering the protective cover to the foam body comprises the step of adhering the protective cover to the foam body with an adhesive.

According to yet another preferred embodiment of the invention, the protective cover is transparent, and the method includes the step of applying a material to an inside surface of the protective cover before adhering the protective cover to the foam body.

According to yet another preferred embodiment of the invention, the protective cover is transparent, and the method includes the step of applying a material to an inside surface of the protective cover before adhering the protective cover to the foam body, the material being selected from the group consisting of paints, pigments, dyes, decalcomanias, labels and placards.

### Brief Description of the Drawings

Some of the objects of the invention have been set forth above. Other objects and advantages of the invention will appear as the discussion of the invention proceeds when taken in conjunction with the following drawings, in which:

Figure 1 is a perspective view of an infant carrier in accordance with one embodiment of the invention;

Figure 2 is a side elevation of the infant carrier shown in Figure 1;

Figure 3 is a perspective view of the infant carrier shown in Figure 1 with internal skeleton and support elements shown in phantom lines;

Figure 4 is a side elevation of the infant carrier shown in Figure 1 with internal skeleton and support elements shown in phantom lines;

Figure 5 is a plan view of the skeleton components of the infant carrier according to one embodiment of the invention;

Figure 6 is an exploded perspective view of the skeleton components of the infant carrier according to the embodiment of the invention shown in Figure 5;

Figure 7 is a perspective view similar to Figure 1 showing areas of the infant carrier having different surface materials;

Figure 8 is a bottom perspective view of the infant carrier shown in Figure 1;

Figure 9 is a fragmentary cross-sectional view of the top of the headrest portion of the infant carrier taken substantially at line 9-9 of Figure 1;

Figure 10 is a fragmentary cross-sectional view of the bottom of the back portion of the infant carrier taken substantially at line 10-10 of Figure 1; and

Figure 11 is a perspective view of an alternative design for the skeleton portion of the infant carrier.

### Description of the Preferred Embodiment and Best Mode

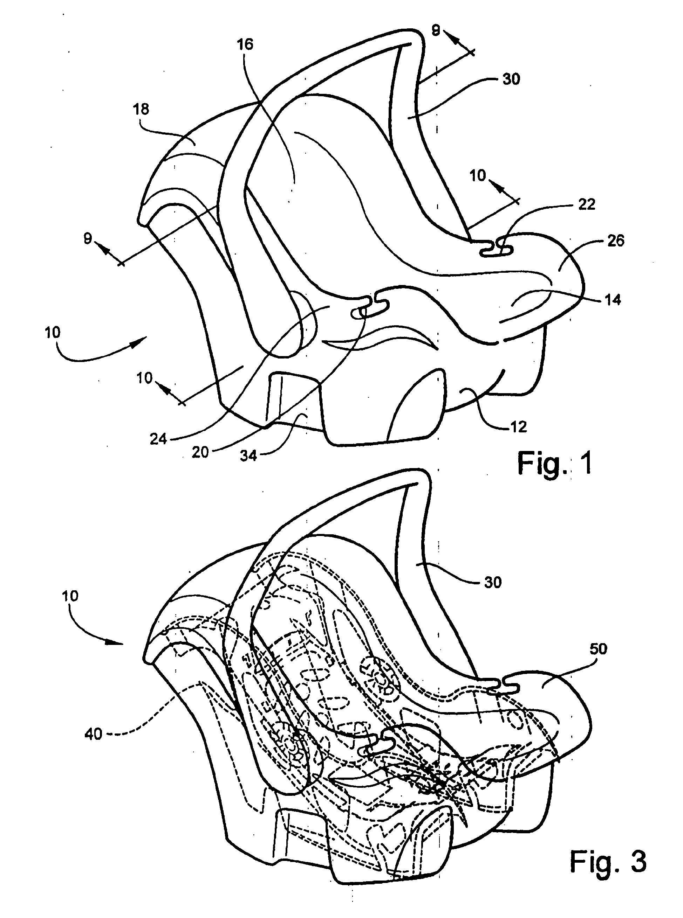

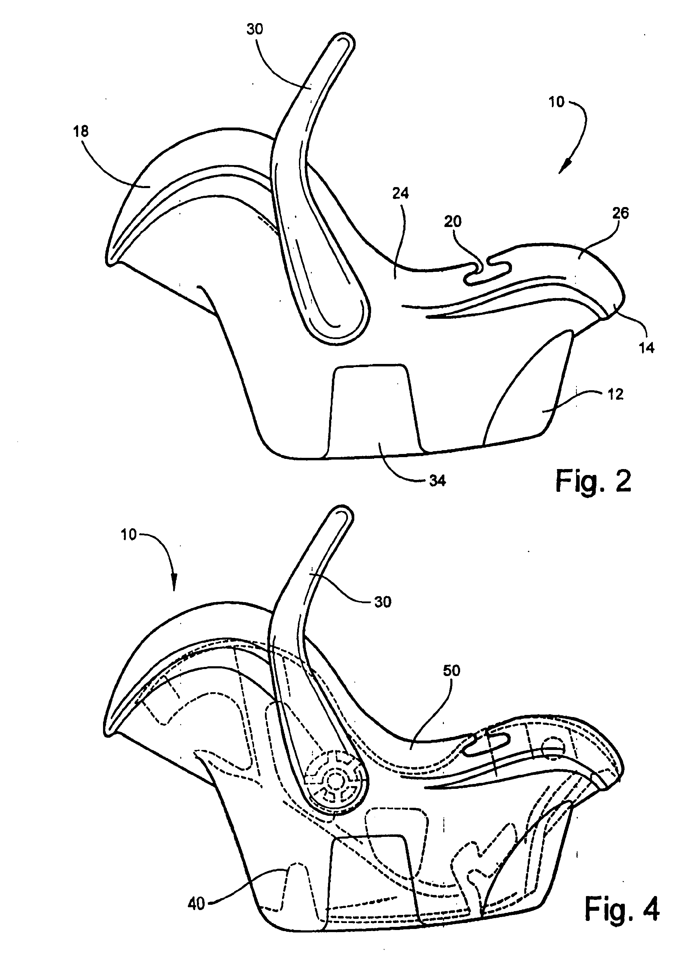

Referring now specifically to the drawings, a juvenile transport product in the form of an infant carrier 10 is generally illustrated in Figures 1 and 2. The infant carrier 10 is one of many juvenile transport products, including infant carriers of differing configurations, to which the invention described and claims herein has application.

The infant carrier 10 includes a base 12 that supports a seat bottom 14, a seat back 16 and a headrest 18. Lap belt guides 20, 22 are provided in opposing sidewalls 24, 26 for the capture and retention of a lap belt. The lap belt guides 20, 22 may be of different designs, and either integrally-molded, a shown, or provided as separate components that are snapped into place or otherwise inserted into the seat. A shoulder belt guide, not shown, may also be provided in the seat back 16.

The infant carrier 10 also preferably includes a harness assembly, not shown, that properly positions and restrains the infant. Conventional harnesses, such as 5 point and 3 point harnesses are suitable, and may vary according to carrier conformation, regulatory requirements and the existence of other elements in the carrier 10.

The carrier 10 also includes a carry handle 30 of conventional design. The handle 30 is mounted to opposite sides of the carrier 10 at approximately the juncture of the seat bottom 14 and seat back 16.

The carrier 10 may also include an interface device, such as locking recesses 34 on opposite sides of the base 12 for allowing the carrier 10 to be positioned and locked onto another device, such as a stroller.

Referring now to Figures 3 and 4, the carrier is constructed by providing an internal rigid skeleton 40, shown in phantom, around which is molded a lightweight, shape-providing foam body 50. The skeleton 40 provides rigidity and strength to the carrier 10, as well as a structure to which components such as the belt guides 20, 22, carry handle 30, harness, adjustor and other devices may be attached and supported. The skeleton 40 is preferably fabricated from polypropylene or similar polymeric material such as presently found in conventional infant carriers. However a wide variety of substantially rigid materials can be used for the skeleton 40, including but not limited to plastics, metals or rigid fiber material, such as carbon-fiber, or other matrices that may include fibers, resins, plastics or combinations of these materials. The skeleton 40 is preferably injection-molded and may be fabricated of any otherwise suitable material that provides required strength, rigidity, durability and light weight, as well as the ability to receive and support attachments, as described above.

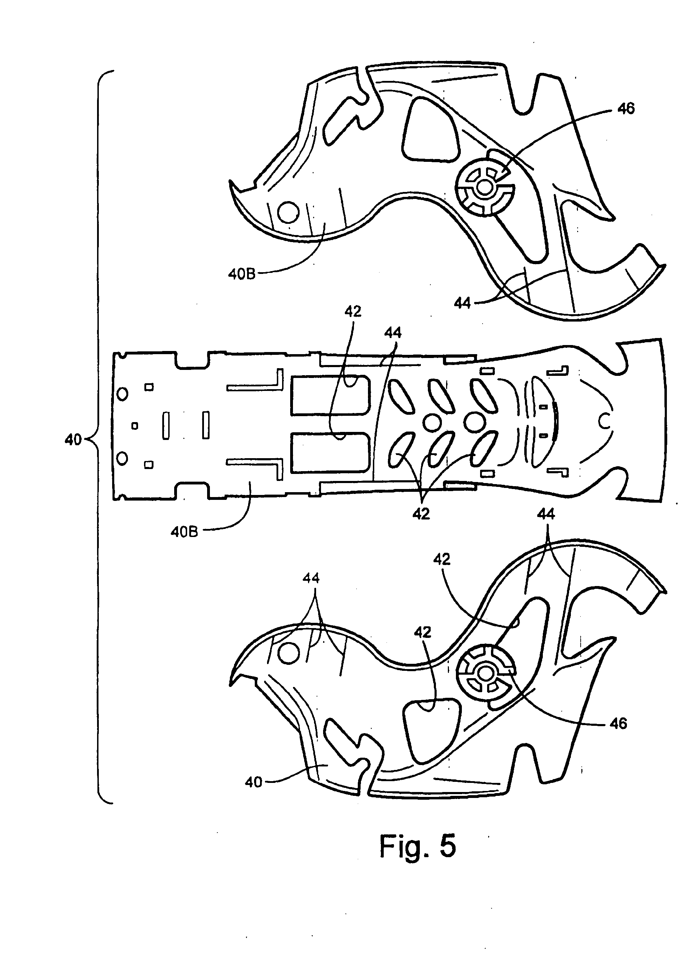

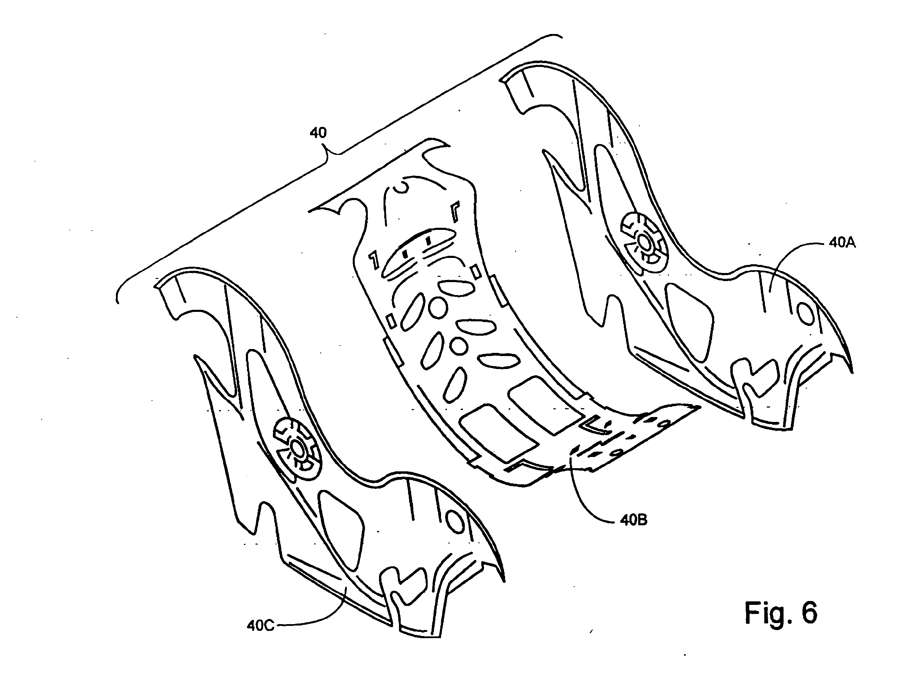

The skeleton 40 may be fabricated as a single unit, or of two or more sub-assemblies that are then joined to form a complete unit. As is shown in Figures 5 and 6, the skeleton 40 may be formed in three relatively flat sub-assemblies 40A-40C, that are then assembled and fastened together before being placed in the mold. Forming the skeleton 40 in these subassemblies allows a simpler skeleton design, eliminates the need for tool side action during formation of the skeleton parts, allows for stronger resins in the load-bearing areas and stronger weld lines, and reduces warping during shipping.

Assembly can be by any suitable means, and may include snap-fit areas that interlock to connect the subassemblies 40A-40C together, or mechanical fasteners such as clips, screws, rivets or grommets, and/or adhesives such as epoxies, that will rigidly and permanently join the sub-assemblies 40A-40C together.

The skeleton 40 includes numerous voids 42 that reduce weight and provide areas through which the liquid foam of the body 50 will flow together and unite into a unitary mass when cured, and within which the skeleton is permanently encased. Other voids provide attachment and access areas for accessory devices, as noted above. Likewise, the skeleton 40 includes ribs 44 positioned to increase the stiffness and load bearing capabilities of the skeleton 40 with minimal additional mass.

The skeleton also includes annular attachment bosses 46 to which the handle 30 is rotatably mounted.

The body 50 is preferably fabricated of a lightweight foam, such as expanded polystyrene foam (EPS), that is injection-molded onto and around the skeleton 40. The foam body 50 provides the outer conformation of the carrier 10. The extreme light weight of the body 50 permits the skeleton 40 to have sufficient mass to provide enhanced strength and rigidity within the overall weight limitations of the carrier 10. Other materials from which the body 50 may be formed include urethane, expanded polypropylene (PPS) and other foamable materials that otherwise meet product and regulatory requirements.

In a preferred method, the skeleton 40 and body 50 are formed by an insert molding process that is carried out by placing the skeleton 40 into a mold into which EPS or similar expanded foam such as expanded polypropylene (EPP), expanded polyurethane (EPU) or combination thereof, is injected to create a final part in the shape of the infant carrier 10, with the skeleton 40 securely and permanently embedded within the body 50. The body 50 may, as molded, form the outer shape of the infant carrier 50, or additional pieces may be applied by adhesives or otherwise to form the final shape of the infant carrier.

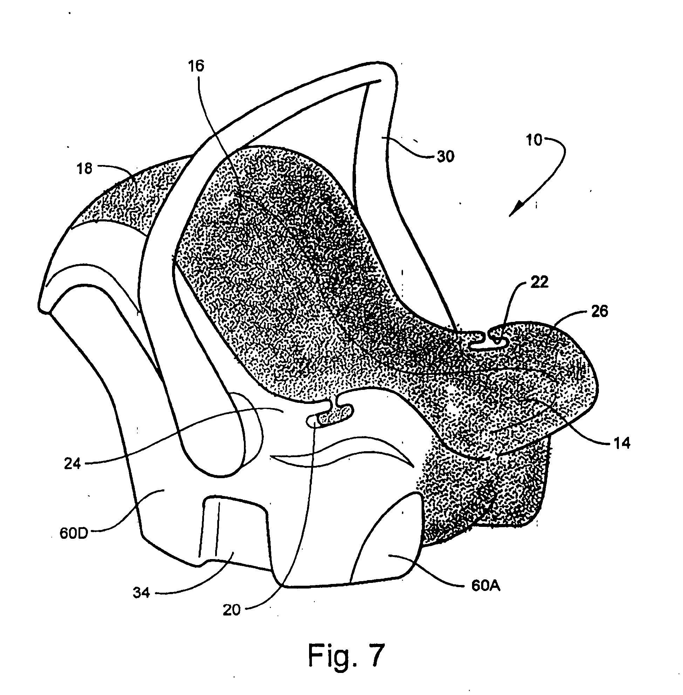

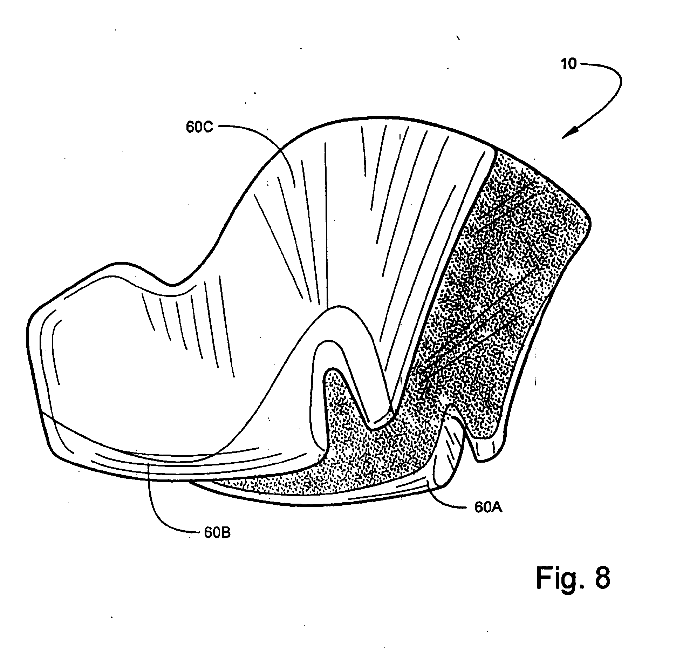

Referring now to Figures 7 and 8, a further feature of the present invention is illustrated. As noted above, the foam body 50 is molded around the skeleton 40. The foam body 50, while lightweight and easily formed into the desired shape of the carrier 10, is not resistant to damage and wear, particularly from impact with objects that may cause crushing of the foam and resultant dents. This is a matter of both aesthetics and avoidance of gradual deterioration in the functionality of the foam body 50. For this reason, areas of the body 50 that are most subject to wear and damage are covered by a protective cover in the form of a very thin "microshell" 60. In Figures 7 and 8, the EPS foam areas of the body 50 are indicated by surface stippling, with the microshell areas of the body 50 being indicated by an absence of surface stippling.

The microshell 60 is preferably formed of polycarbonate (PC) sheet, which is very hard and durable. Other materials may include polyethylene terephthalate (PET) polyethylene terephthalate modified with CHDM (PETG), polyvinyl chloride (PVC), polycarbonate blended with acrylonitrile-butadiene-styrene copolymer (PC/ABS), high density polyethylene (HDPE), high molecular weight polyethylene (HMWPE), polypropylene (PP) or other materials that can be thermoformed or vacuum formed.

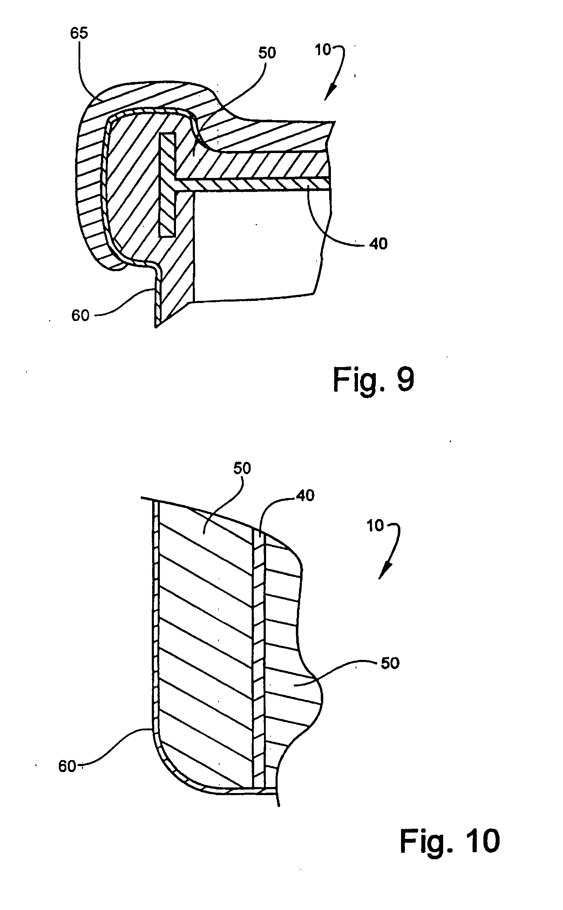

The film is preferably molded to the appropriate exterior areas of the body 50 during the same molding process whereby the body 50 is molded to the skeleton 40, a process referred to as "in-mold bonding." Alternatively, the microshell 60 can be applied to the surface of the body 50 in a separate molding step after the body 50 has been molded to the skeleton 40, or the microshell 60 can be molded to shape in a separate operation and applied to the body 50. See Figures 9 and 10. The microshell 60 is preferably attached to the body 50 with a suitable adhesive, or with double-sided tape.

The microshell 60 is preferably formed of four elements 60A-D. Rocker microshells 60A and 60B are applied over the foam at the bottom of the base 12 as shown in Figures 7 and 8. The opposing, nearly parallel walls of these elements may be suitably attached with adhesive. Side microshells 60C-D protect the foam sides of the carrier 10 from impact and damage. The relatively flat areas of the side microshells 60C-D may lack sufficient contour to enable adhesion with an adhesive alone, and so are overlapped by the rocker microshells 60A-B. The top edge of the side microshells 60C-D where they curve over the top of the sidewalls 24, 26 may also be adhered only with adhesive. Steps in the foam body 50 may also be provided to protect the edge of the microshell 60 against snagging and to assist in keeping the microshell 60 in place.

Additional adherence of the microshell 60 to the body 50 is achieved by applying the lap belt guides 20, 22 and the handle 30 to the skeleton 40 after the microshell 60 is applied, thus providing a mechanical retention of the microshell 60 to the body 50 at these positions.

In addition to providing direct protection to the body 50, use of the microshell permits paint, design and text elements to be placed on the inner side of clear microshell 60 for viewing from the opposite, outer side, protecting these elements from damage, as well.

A fabric padding insert 65 and head pad, not shown, are nested into the infant carrier 10 to form a completed product ready for use. The head pad is preferably adjustable and mounted to a lever for up and down movement. The head pad is preferably compression-molded and load-bearing in rear impact. Extra ribbing may be provided along the lever slot opening to provide extra stiffness to the seat back 16. A stroller hook may be provided for latching to a stroller.

In one preferred embodiment, the microshell have a thickness of between about .38mm and 5mm, and more preferably a thickness of about .5mm to about 1mm. The EPS foam is a closed (open) cell foam having a density of about 2 to 6 lbs/ft3 , with a preferred density of about 3 lbs/ft3 .

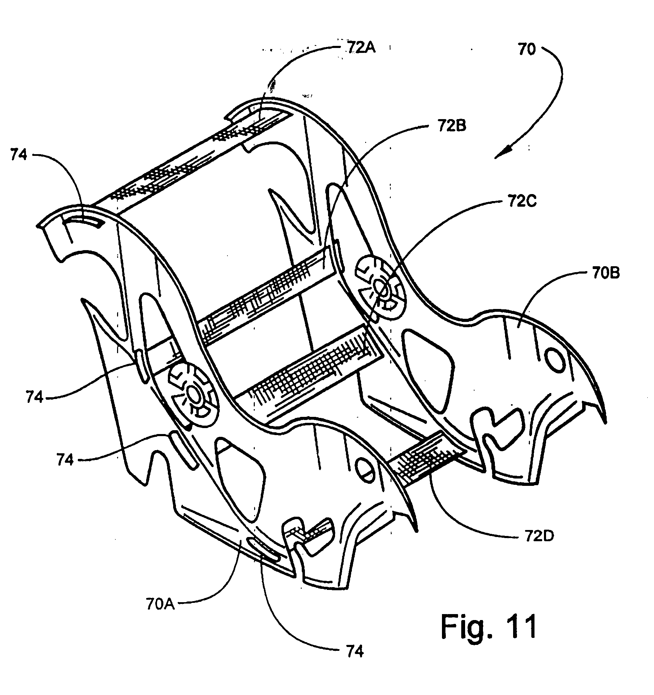

As is shown in Figure 11, another structure for the skeleton comprises a skeleton 70 formed of a pair of side subassemblies 70A, 70B interconnected by lengths of an intermediate support, such as webbing strips 72A-72D, that extend through slots 74 in the subassemblies 70A, 70B. When the subassemblies 70A, 70B are placed in a mold in proper spaced-apart relation, the webbing strips 72A-D are maintained in a taut condition while molding takes place. After molding is completed, the skeleton 70 is embedded in the body provides a relatively rigid support.

A juvenile transport product is described above. Various details of the invention may be changed without departing from its scope. Furthermore, the foregoing description of the preferred embodiment of the invention and the best mode for practicing the invention are provided for the purpose of illustration only and not for the purpose of limitation--the invention being defined by the claims.

## Claims

1. A juvenile transport product, comprising:
(a) a load-bearing support skeleton; and
(b) a foam body molded to the skeleton and supported thereby.

2. A juvenile transport product according to claim 1, wherein the support skeleton is formed of an openwork structure defined by integrally-formed support members and weight-reducing voids.

3. A juvenile transport product according to claim 1 or 2, wherein the foam body has a shape generally corresponding to the shape of the juvenile transport product.

4. A juvenile transport product according to any one of claims 1 to 3, and including a protective cover shell adhered to the foam body to protect the foam against damage from wear and impacts.

5. A juvenile transport product according to any preceding claim, wherein the skeleton provided a rigid support to the body.

6. A juvenile transport product according to any preceding claim, wherein the support skeleton is formed from a material selected from the group consisting of carbon fibers, plastics, resins and combinations of carbon fibers, plastics and resins.

7. A juvenile transport product according to any preceding claim, wherein the support skeleton comprises first and second side components and an intermediate component adapted to be secured between the first and second side components.

8. A juvenile transport product according to any preceding claim, wherein the juvenile transport product comprises an infant carrier, and the support skeleton comprises first and second infant carrier side components and an intermediate seat component adapted to be secured between the first and second side components to form a unitary infant carrier skeleton.

9. A juvenile transport product according to any preceding claim, wherein the juvenile transport product comprises an infant carrier, and the support skeleton comprises an integrally-formed, unitary infant carrier skeleton.

10. A juvenile transport product according to any preceding claim, wherein the foam body comprises foam selected from the group consisting of open cell foam and closed cell foam.

11. A juvenile transport product according to claim 10, wherein the foam body comprises a foam selected from the group consisting of expanded polystyrene (EPS), expanded polypropylene (EPP), polyurethane (PE) and combinations thereof.

12. A juvenile transport product according to claim 4, wherein the protective cover is selected from the group consisting of polyethylene terephthalate (PET) polyethylene terephthalate modified with CHDM (PETG), polyvinyl chloride (PVC), polycarbonate (PC), polycarbonate blended with acrylonitrile-butadiene-styrene copolymer (PC/ABS), high density polyethylene (HDPE), high molecular weight polyethylene (HMWPE), and polypropylene (PP).

13. A juvenile transport product according to claim 12, wherein the protective cover forms a thin, resilient surface.

14. A juvenile transport product according to claim 12 or 13, wherein the protective cover is transparent.

15. A juvenile transport product according to any one of claims 4, 12, 13 or 14, wherein the protective cover has a thickness of about between 0.038cm and 0.5cm.

16. A juvenile transport product according to claim 15, wherein the protective cover has a thickness of about 0.05cm to about 0.1cm.

17. A juvenile transport product according to any preceding claim, and including a carry handle assembly pivotally mounted to the skeleton.

18. A method of forming a juvenile transport product, and comprising the steps of:
(a) forming a load-bearing support skeleton;
(b) placing the support skeleton in a mold; and
(c) molding a foam body to the skeleton.

19. A method according to claim 18, and including the step of adhering a protective cover shell to the foam body to protect the foam against damage from wear and impacts.

20. A method according to claim 18 or 19, wherein the step of forming the skeleton comprises the step of molding the skeleton.

21. A method according to any one of claims 18 to 20, wherein the step of molding the foam body to the skeleton comprises the step of injection molding.

22. A method according to any one of claims 18 to 21, wherein the step of forming the skeleton comprises the step of molding the skeleton in a single piece.

23. A method according to any one of claims 18 to 22, wherein the step of forming the skeleton comprises the steps of:
(a) molding a plurality of skeleton elements that collectively comprise the entire skeleton; and
(b) joining the skeleton elements to form the skeleton before molding the foam body to the skeleton.

24. A method according to claim 19, wherein the protective cover shell comprises a plurality of cover elements applied to different parts of the foam body.

25. A method according to claim 19 or 24, and including the step of molding the protective cover shell to the foam body during the foam body molding step.

26. A method according to claim 19 or 24, and including the step of adhering the protective cover shell to the foam body after the foam body molding step.

27. A method according to claim 26, wherein the step of adhering the protective cover shell to the foam body comprises the step of adhering the protective cover shell to the foam body with an adhesive.

28. A method according to any one of claims 19, 24, 25, 26 or 27, and wherein the protective cover shell is transparent, and the method includes the step of applying a material to an inside surface of the protective cover shell before adhering the protective cover shell to the foam body.

29. A method according to claim 28, the material being selected from the group consisting of paints, pigments, dyes, decalcomanias, labels and placards.
